(19) **Europäisches Patentamt / European Patent Office / Office européen des brevets**

(11) **EP 3 100 315 B1**

(12) **FASCICULE DE BREVET EUROPEEN**

(45) Date de publication et mention
de la délivrance du brevet:
**14.03.2018 Bulletin 2018/11**

(21) Numéro de dépôt: **15705716.7**

(22) Date de dépôt: **27.01.2015**

(51) Int Cl.:
*H01M 2/02* *(2006.01)*   *H01M 10/052* *(2010.01)*
*H01M 10/0525* *(2010.01)*   *H01M 10/42* *(2006.01)*

(86) Numéro de dépôt international:
**PCT/IB2015/050611**

(87) Numéro de publication internationale:
**WO 2015/114517 (06.08.2015 Gazette 2015/31)**

(54) **PROCEDE DE REGENERATION DE CAPACITE D'UN ACCUMULATEUR ELECTROCHIMIQUE AU LITHIUM, BOITIER D'ACCUMULATEUR ET ACCUMULATEUR ASSOCIES**

VERFAHREN ZUR REGENERATION DER KAPAZITÄT EINER ELEKTROCHEMISCHEN LITHIUMBATTERIE SOWIE ZUGEHÖRIGES BATTERIEGEHÄUSE UND BATTERIE

METHOD FOR REGENERATING THE CAPACITY OF AN ELECTROCHEMICAL LITHIUM BATTERY, AND ASSOCIATED BATTERY HOUSING AND BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.01.2014 FR 1450778**

(43) Date de publication de la demande:
**07.12.2016 Bulletin 2016/49**

(73) Titulaire: **Commissariat à l'Énergie Atomique et aux Énergies Alternatives**
**75015 Paris (FR)**

(72) Inventeurs:
• **BRUN-BUISSON, David**
**38470 Vatilieu (FR)**
• **GENIES, Sylvie**
**38120 Saint-Egreve (FR)**

(74) Mandataire: **Nony**
**11 rue Saint-Georges**
**75009 Paris (FR)**

(56) Documents cités:
**WO-A2-2008/002626    JP-A- H08 167 401**
**JP-A- 2008 171 649**

**Description**

Domaine technique

La présente invention concerne le domaine des générateurs électrochimiques au lithium, qui fonctionnent selon le principe d'insertion ou de désinsertion, ou autrement dit intercalation- désintercalation, de lithium dans au moins une électrode.

Elle concerne plus particulièrement un accumulateur électrochimique au lithium, de type Li-ion, comportant au moins une cellule électrochimique constituée d'une anode (électrode négative) et d'une cathode (électrode positive) de part et d'autre d'un séparateur imprégné d'électrolyte, deux collecteurs de courant dont un est relié à l'anode et l'autre à la cathode, et un boitier agencé pour loger la cellule électrochimique avec étanchéité tout en étant traversé par une partie des collecteurs de courant formant les bornes de sortie, aussi appelés pôles.

Le séparateur peut être constitué d'un ou plusieurs films.

L'invention vise à proposer une méthode de régénération de la capacité des générateurs électrochimiques.

Par « régénération de capacité », on entend ici et dans le cadre de l'invention, la reconstitution de la capacité d'un accumulateur dimensionnée initialement avec les matériaux des électrodes de la (des) cellule(s) qui le constitue(nt), c'est-à-dire du niveau de puissance initiale pouvant être extraite en 1 heure.

Bien que décrite en référence à un accumulateur Li-ion, l'invention s'applique à tout accumulateur électrochimique au lithium.

Etat de la technique

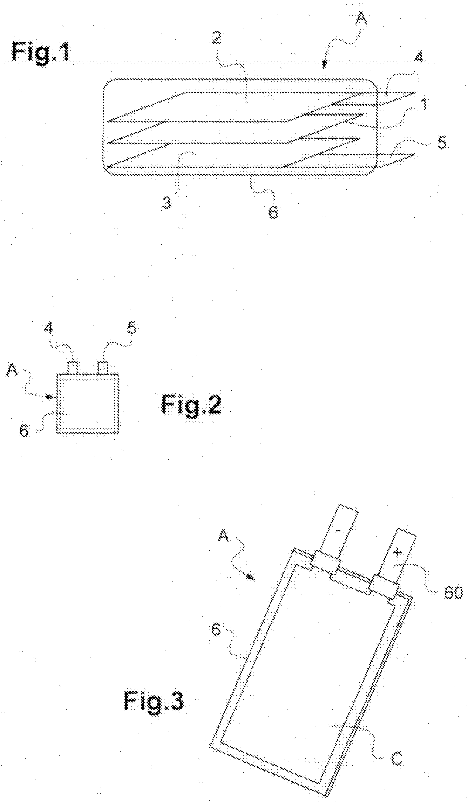

Telle qu'illustrée schématiquement en figures 1 et 2, une batterie ou accumulateur lithium-ion A comporte usuellement au moins une cellule électrochimique C constituée d'un séparateur imprégné d' un constituant électrolyte 1 entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité tout en étant traversé par une partie des collecteurs de courant 4, 5, formant les bornes de sortie.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :

- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur, sous la forme d'un ou plusieurs films, en polymère ou en composite microporeux, imbibé d'électrolyte (s) organique (s) ou de type liquide ionique qui permet le déplacement des ions Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement $LiPF_6$.

L'électrode positive ou cathode 2 est constituée de matériaux d'insertion du cation Lithium qui sont en général composite, comme le phosphate de fer lithié $LiFePO_4$, l'oxyde de cobalt lithié $LiCoO_2$, l'oxyde manganèse lithié, éventuellement substitué, $LiMn_2O_4$ ou un matériau à base de $LiNi_xMn_yCo_zO_2$ avec x+y+z = 1, tel que $LiNi_{0.33}Mn_{0.33}Co_{0.33}O_2$, ou un matériau à base de $LiNi_xCo_yAl_zO_2$ avec x+y+z = 1, $LiMn_2O_4$, $LiNiMnCoO_2$ ou l'oxyde de nickel cobalt aluminium lithié $LiNiCoAlO_2$.

L'électrode négative ou anode 3 est très souvent constituée de carbone, graphite ou en $Li_4TiO_5O_{12}$ (matériau titanate), éventuellement également à base de silicium ou à base de lithium, ou à base d'étain et de leurs alliages ou de composite formé à base de silicium.

L'anode 3 et la cathode 2 en matériau d'insertion au Lithium peuvent être déposées selon une technique usuelle sous la forme d'une couche active sur une feuille métallique constituant un collecteur de courant.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement autour de 3,6 Volt.

Selon le type d'application visée, on cherche à réaliser soit un accumulateur lithium-ion fin et flexible, soit un accumulateur rigide : l'emballage est alors soit souple, soit rigide et constitue dans ce dernier cas en quelque sorte un boitier.

Les emballages souples sont usuellement fabriqués à partir d'un matériau composite multicouche constitué d'un empilement de couches d'aluminium recouvertes par un ou plusieurs film(s) en polymère laminés par collage.

La figure 3 illustre ce type d'emballage souple 6 qui est agencé pour contenir la cellule électrochimique C avec étanchéité tout en étant traversé par une partie 40, 50 de deux lamelles 4, 5 formant les pôles et qui s'étendent dans le plan de la cellule électrochimique. Comme montré en figure 3, des renforts en polymère 60 à base de polyoléfine peuvent être prévus pour améliorer le scellage à chaud de l'emballage 6 autour des lamelles 4, 5. L'avantage principal des emballages souples est leur légèreté. Les accumulateurs Li-ion avec les plus grandes densités d'énergie comportent de ce fait un emballage souple. L'inconvénient majeur de ces emballages souples est que leur étanchéité se détériore fortement au cours du temps du fait de la non-tenue chimique du scellage réalisé.

Une batterie ou accumulateur Li-ion comporte un emballage rigide ou boitier lorsque les applications visées sont contraignantes où l'on cherche une longue durée de vie, avec par exemple des pressions à supporter bien supérieures et un niveau d'étanchéité requis plus strict, typiquement inférieure à $10^{-6}$ mbar.l/s d'hélium, ou dans des milieux à fortes contraintes comme le domaine aéronautique ou spatial. L'avantage principal des emballages rigides est ainsi leur étanchéité élevée et maintenue au cours du temps du fait que la fermeture des boitiers est réalisée par soudure, en générale par soudure au laser.

Aussi, à ce jour un emballage rigide utilisé est constitué d'un boitier métallique, généralement en un métal léger et peu coûteux, typiquement en acier inoxydable (inox 316L ou inox 304) ou en aluminium (Al 1050 ou Al 3003), ou encore en titane. En outre, l'aluminium est généralement préféré pour son coefficient de conductivité thermique élevé comme expliqué ci-après. Des boitiers réalisés en acier recouvert d'un revêtement bimétal en cuivre/nickel ont déjà été envisagés dans la demande de brevet WO 2010/113502.

Des boitiers en matière plastique, en particulier intégralement en polymère ont également déjà été envisagés, en particulier dans la demande de brevet US 2010/316094. Bien que présentant une tenue mécanique importante, ces boitiers n'ont que peu de chances d'être viable économiquement en raison du prix de leur matériau constitutif.

Des boitiers en matériau mixte polymère/fibres ont été également envisagés.

L'avantage principal des emballages rigides est leur étanchéité élevée et maintenue au cours du temps du fait que la fermeture des boitiers est réalisée par soudure, en générale par soudure au laser.

La géométrie de la plupart des boitiers d'accumulateurs Li-ion est cylindrique, car la plupart des cellules électrochimiques des accumulateurs sont enroulées par bobinage selon une géométrie cylindrique. Des formes prismatiques de boitiers ont également déjà été réalisées.

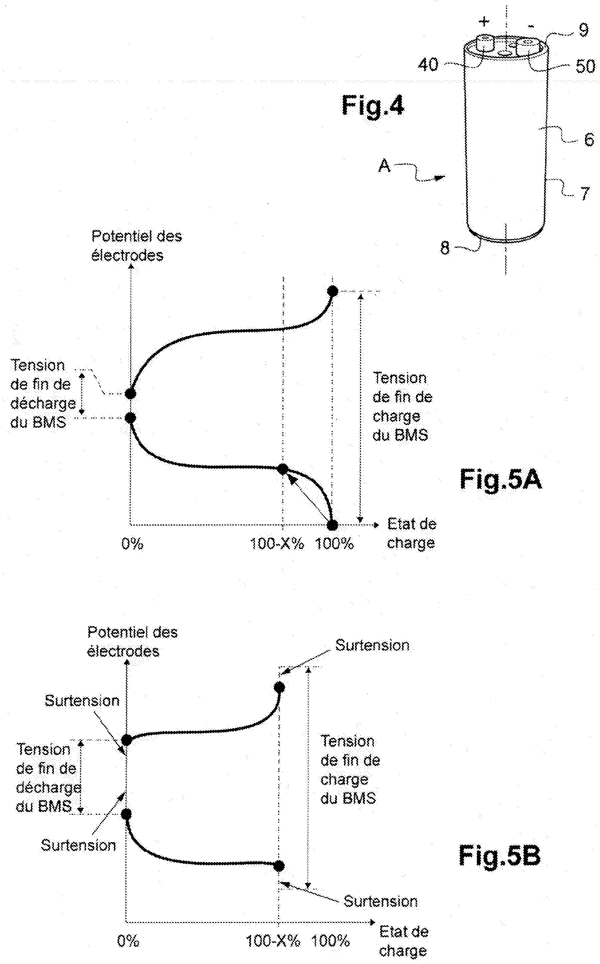

Un des types de boitier rigide de forme cylindrique, usuellement fabriqué pour un accumulateur Li-ion de forte capacité et à durée de vie supérieure à 10 ans, est illustré en figure 4.

Le boitier 6 d'axe longitudinal X comporte une enveloppe latérale cylindrique 7, un fond 8 à une extrémité, un couvercle 9 à l'autre extrémité. Le couvercle 9 supporte les pôles ou bornes de sortie du courant 40, 50. Une des bornes de sortie (pôles), par exemple la borne positive 40 est soudée sur le couvercle 9 tandis que l'autre borne de sortie, par exemple la borne négative 50, passe à travers le couvercle 9 avec interposition d'un joint non représenté qui isole électriquement la borne négative 50 du couvercle.

Quel que soit le type d'emballage souple ou rigide par boitier envisagé à ce jour, la ou les cellules électrochimiques est (sont) de fait contenue(s) dans une enceinte complètement étanche vis-à-vis de l'extérieur.

Le fonctionnement d'un accumulateur ou batterie lithium-ion (Li-ion) repose sur le principe d'oxydo-réduction réversible des matériaux d'anode (électrode négative) et cathode (électrode positive) qui les composent par une insertion/désinsertion d'ions lithium en leur sein. Cette propriété permet à la batterie de stocker de l'énergie sous forme électrochimique.

Par exemple, au cours d'une charge, il se produit une désinsertion des ions lithium de la cathode avec leur insertion dans les même quantités dans l'anode, et vice-et-versa à cours de la décharge. La quantité d'ions lithium utilisée au cours de ces processus d'insertion est directement proportionnelle à la capacité de l'accumulateur ou batterie.

Dans le cas particulier d'un accumulateur Li-ion à anode en graphite, il est connu qu'une partie du lithium inséré à l'état chargé dans cette électrode peut réagir en surface. Cela a pour effet d'entrainer la création d'un film de passivation (SEI, acronyme anglais pour « *Solid Electrolyte-Interphase* »), et de consommer du lithium échangeable, c'est-à-dire apte à être inséré/désinséré. De ce fait, la capacité de l'accumulateur chute proportionnellement avec cette consommation de lithium.

On a représenté aux figures 5A et 5B, les courbes de potentiel des électrodes (cathode en haut et anode en bas) d'un accumulateur Li-ion en fonction de leur charge, respectivement à une capacité initiale correspondant à 100% de l'état de charge et à une capacité réduite correspondant à 100-x % de l'état de charge avec une perte de x% de charge à l'électrode négative générée par le manque d'ions lithium échangeables.

Comme illustré en figure 5B comparativement à la figure 5A, les potentiels des matériaux actifs d'électrode ne sont plus capables d'atteindre les valeurs initiales des états de charge extrêmes de l'accumulateur (0 et 100%) par lithiation/délithiation en raison du manque d'ions lithium échangeables.

Le système électronique de gestion de la batterie (BMS, acronyme anglais de « *Battery Management System* ») a notamment pour fonction d'arrêter les applications de courant dès l'atteinte de valeurs de tension seuil, i.e. une différence de potentiels entre les deux matériaux d'insertion actifs.

Dans le cas où les états de charges extrêmes ont des valeurs réduites de x% du fait du manque d'ions lithium échangeables, le BMS n'arrête pas les applications de courant suffisamment tôt, ce qui induit des surtensions sur les matériaux d'insertion actifs, ce qui entraîne leur dégradation. De plus, la perte de capacité engendrée induit l'apparition d'autres phénomènes dégradants pour ces matériaux.

Certains documents de l'état de l'art ont déjà identifiés le problème de perte de capacité des accumulateurs Li-Ion par le manque d'ions lithium échangeables. Les solutions proposées permettent de réinjecter des ions lithium pour compenser ce manque.

Le brevet JP2012089471 propose d'insérer depuis l'extérieur d'un accumulateur Li-ion, à travers son emballage, un équipement, sous la forme d'une seringue, adaptée pour réinjecter des ions lithium Li$^+$. Plus précisément, la seringue comporte une chambre contenant un produit électrolyte lui-même en contact avec le tube d'injection qui permet d'avoir une continuité ionique entre le produit et les matériaux actifs de batterie par remplissage d'électrolyte. Le tube d'injection est conducteur électronique afin de permettre un échange d'électrons entre un matériau actif d'accumulateur et le produit électrolyte. Ce dernier a un potentiel d'oxyde-réduction faible pour engendrer spontanément une réaction avec l'un des matériaux actifs des deux électrodes de l'accumulateur. Le produit contient des ions lithium qui prennent part aux réactions d'oxydo-réduction. Ainsi, par la mise en contact entre le matériau d'insertion actif de l'une des électrodes et le produit, il est possible de réinsérer des ions lithium dans les matériaux actifs, par conduction ionique et électronique. Cette solution de réinjection d'ions lithium depuis l'extérieur au moyen d'une seringue nécessite une conception d'accumulateurs qui intègre un organe de pénétration du tube d'injection au travers de l'emballage. La fragilité de l'accumulateur est donc plus importante, le risque de fuite est non négligeable.

Les demandes de brevet WO201224211, EP2595235 et JP2011076930, proposent quant à elles d'intégrer dans un accumulateur Li-ion, une troisième électrode, c'est-à-dire une électrode supplémentaire à l'anode et la cathode d'une cellule électrochimique. La troisième électrode ainsi intégrée est adaptée pour contenir des ions lithium qu'il est possible d'extraire pour les injecter dans les matériaux d'insertion actifs de l'accumulateur. Cette opération est effectuée électrochimiquement, par l'application d'un courant entre cette troisième électrode et l'une choisie parmi l'anode ou la cathode de l'accumulateur. Cette solution nécessite donc l'ajout d'une électrode supplémentaire, ce qui a comme inconvénient d'ajouter du volume et du poids à l'accumulateur. Il est aussi nécessaire d'ajouter une troisième borne de sortie à l'architecture des accumulateurs reliée électriquement à la troisième électrode, afin d'appliquer le courant entre cette troisième électrode et celle dans laquelle les ions lithium sont réinjectés pour régénérer la capacité initiale. Cette troisième borne de sortie doit être nécessairement réalisée en formant une traversée, c'est-à-dire avec l'élément conducteur électrique isolé de la paroi de l'emballage, qui soit étanche. Cette solution présente donc l'inconvénient majeur de complexifier l'architecture des accumulateurs Li-ion.

La demande de brevet JP H08167401A divulgue un accumulateur électrochimique dont le boitier est principalement constitué d'aluminium.

La demande de brevet JP 2008 171649 A divlugue un accumulateur Li-ion comportant un substrat en aluminium et une électrode négative composée d'une couche en alliage aluminium-lithium.

La demande de brevet WO 2008 002626 A2 divulgue un accumulateur Li-ion comportant un système de stockage de lithium dans le but de compenser la perte de lithium. Ce système prend la forme d'une électrode auxiliaire.

Il existe donc un besoin d'améliorer encore les solutions existantes de régénération de la capacité d'un accumulateur au lithium, tel qu'un accumulateur Li-ion, notamment afin d'éviter l'apparition de surtensions en son sein et d'augmenter sa durée de vie.

Le but de l'invention est de répondre au moins en partie à ce besoin.

Exposé de l'invention

Pour ce faire, l'invention a pour objet selon un premier de ses aspects, un procédé de régénération de la capacité d'un accumulateur électrochimique au lithium, tel qu'un accumulateur Li-ion, comportant au moins une cellule électrochimique comportant une anode, une cathode et un séparateur imprégné d'un électrolyte entre l'anode et la cathode, deux collecteurs de courant dont un est relié à l'anode et l'autre à la cathode, et un boitier agencé pour loger la cellule électrochimique avec étanchéité tout en étant traversé par une partie des collecteurs de courant formant les bornes de sortie, le procédé comportant les étapes suivantes :

> a/ évaluation de la quantité d'ions lithium,
> b/ lorsque la quantité d'ions lithium évaluée est inférieure ou égale à une valeur seuil, application d'un courant électrique entre la cathode ou l'anode et le boitier de sorte à provoquer la délithiation du boitier,

le boitier étant en outre agencé pour loger un élément à la fois d'isolation électrique et de conduction ionique entre les électrodes d'anode et de cathode de la cellule électrochimique d'une part et le boitier d'autre part, le boitier comportant au moins une zone de stockage d'ions lithium.

Comme évoqué en préambule, la consommation de lithium dans une électrode d'un accumulateur au lithium (anode pour un accumulateur Li-ion) génère un manque d'ions lithium échangeables et provoque donc une perte de capacité et l'apparition de phénomènes de surtension entrainant un vieillissement des matériaux d'insertion de plus en plus évolutif au cours du temps.

La solution selon la présente invention permet de réinjecter du lithium dans un des matériaux actifs afin de régénérer la capacité de l'accumulateur au lithium et d'éviter l'apparition de surtensions dégradantes des électrodes en fin de charge ou décharge, mais contrairement aux solutions selon l'état de l'art lourdes et contraignantes, elle met en oeuvre un stockage des ions-lithium dans un composant existant de l'accumulateur, à savoir le boitier. Ainsi, la solution de régénération de capacité selon la présente invention a pour avantage primordial de ne pas complexifier l'architecture de l'accumulateur,

L'invention consiste tout d'abord à évaluer la quantité de lithium perdue, c'est-à-dire le manque d'ions lithium échangeables.

Le procédé selon la présente invention nécessite seulement une architecture d'accumulateur Li-ion spécifique.

Ainsi, le boitier est isolé électriquement à la fois de l'anode et de la cathode de l'accumulateur. Ensuite, un élément ajouté permet à la fois une conduction ionique entre le(s) matériau(x) du boitier et les matériaux d'insertion au lithium actifs, et une isolation électrique. On précise que selon l'invention les deux bornes sont isolées électriquement du boitier. Avantageusement, il est possible d'utiliser pour l'élément ajouté le même matériau que celui de séparateur d'imprégnation d'électrolyte agencé entre le matériau d'insertion au lithium de l'anode et celui de la cathode.

Enfin, le matériau constitutif du boitier est conducteur électronique et comporte au moins une zone de stockage d'ions lithium au sein de sa structure cristallographique. Ainsi, on prévoit selon l'invention d'intégrer une quantité de lithium apte à compenser le manque d'ions lithium échangeables directement dans le boitier avant l'assemblage final de l'accumulateur.

L'évaluation du manque de lithium échangeable, la modification de l'architecture de l'accumulateur au lithium et de son boitier avec au moins une zone de stockage de lithium prévus selon l'invention permettent alors soit au BMS, soit à un opérateur de maintenance de l'accumulateur d'effectuer une délithiation de son boitier par l'application d'un courant électrique entre la cathode ou l'anode de l'accumulateur et le boitier. Les ions lithium extraits de leur zone de stockage dans le boitier sont alors insérés dans le matériau d'insertion au lithium actif, ce qui permet de récupérer du lithium échangeable. La capacité de l'accumulateur s'en trouve directement régénérée.

Trois variantes peuvent être envisagées pour l'étape d'évaluation a/ selon l'invention :

- mesure de potentiel électrique d'une électrode de référence. Le potentiel d'une électrode est en effet l'expression thermodynamique de la quantité de lithium insérée dans les matériaux d'insertion actifs qui sont des matériaux dits monophasiques.

- mesure de différence de capacité avec la capacité initiale de l'accumulateur,
- mesure d'impédance électrochimique. En effet, une telle mesure permet une estimation par corrélation de la quantité de film de passivation (SEI) qui est produite par la réaction consommation du lithium.

On peut donc calculer la quantité de lithium échangeable qu'il manque.

L'application du courant selon l'étape b/ est de préférence réalisée avec régulation au moyen d'un dispositif électronique. Le dispositif électronique est avantageusement adapté pour calculer l'intégrale du courant en fonction du temps afin de déterminer la capacité régénérée, directement proportionnelle à la quantité de lithium réinjectée dans les matériaux actifs.

L'invention concerne également sous un autre de ses aspects un accumulateur (A) électrochimique au lithium, tel qu'un accumulateur Li-ion, comportant :

- au moins une cellule électrochimique C comportant une anode, une cathode et un séparateur imprégné d'un électrolyte entre l'anode et la cathode,
- deux collecteurs de courant dont un est relié à l'anode et l'autre à la cathode,
- un boitier agencé pour loger la cellule électrochimique avec étanchéité tout en étant traversé par une partie des collecteurs de courant formant les bornes de sortie,

le boitier étant en outre agencé pour loger et un élément à la fois d'isolation électrique et de conduction ionique entre les électrodes d'anode et de cathode de la cellule électrochimique d'une part et le boitier d'autre part, le boitier comportant au moins une zone de stockage d'ions lithium.

Le matériau, de préférence métallique, constituant le boitier doit non seulement avoir de bonnes performances mécaniques, mais aussi la propriété de pouvoir stocker du lithium.

L'aluminium est un matériau avantageux de par sa bonne tenue mécanique pour la réalisation d'un boitier d'accumulateur. De plus, les inventeurs ont réalisé des essais qui ont permis de montrer qu'un substrat en aluminium peut être lithié par voie électrochimique, conduisant à l'obtention d'un alliage aluminium-lithium de formule $Li_xAl$ avec x compris entre 0 et 1. L'alliage peut ainsi être formé sur une partie de l'épaisseur du boitier avec la concentration en lithium qui diminue avec la pénétration dans l'épaisseur et ce, de façon homogène sur toute la surface interne du boitier.

Dans le cas où les ions lithium diffusent, au cours de la vie de la batterie, dans le boitier dans lequel ils sont stockés, il est avantageux d'éviter qu'ils diffusent à l'extérieur de celui-ci. Dans une telle situation, le boitier de l'accumulateur peut comporter avantageusement une couche barrière de diffusion des ions lithium. Cette couche barrière peut être réalisée sur la périphérie externe du substrat de boitier ou dans l'épaisseur de ce dernier. La couche barrière de diffusion est de préférence une couche en oxyde d'aluminium ou alumine $Al_2O_3$.

Selon une première variante, l'élément d'isolation électrique et de conduction ionique est avantageusement constitué d'au moins un film en matériau polymère choisi parmi polyfluorure de vinylidène (PVDF), le polyacétate de vinyle (PVA), le polyméthacrylate de méthyle (PMMA), le polyoxyéthylène (POE), le polyéthylène téréphtalate (PET), un polymère choisi parmi les polyoléfines tels le polypropylène, le polyéthylène, la cellulose.

Selon une deuxième variante, l'élément d'isolation électrique et de conduction ionique est une couche protectrice déposée sur la face interne du substrat de boitier. A titre d'exemple, cette couche protectrice peut être une couche d'oxyde, de carbonate...

Quelle que soit la variante, l'élément d'isolation électrique et de conduction ionique doit isoler les deux bornes du boitier.

Par « anode ou cathode en matériau d'insertion au Lithium », on entend une électrode comportant au moins un matériau d'insertion au lithium et au moins un liant en polymère. Eventuellement, l'électrode peut comprendre en plus un conducteur électronique, par exemple des fibres de carbone ou du noir de carbone.

Par « matériau d'insertion au lithium », en particulier pour l'électrode positive, on entend un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule $LiM_y(XO_z)_n$ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs.

Par « matériau d'insertion au lithium », en particulier pour l'électrode négative, on entend également un matériau choisi parmi: oxyde de titane lithié ou non, par exemple $Li_4Ti_5O_{12}$ ou $TiO_2$. Plus particulièrement, le matériau d'électrode négative peut être choisi parmi les matériaux carbonés, les oxydes de titane non lithiès et leurs dérivés et les oxydes de titane lithiés tels que $Li_4Ti_5O_{12}$ et leurs dérivés et un mélange de ceux-ci.

Par « dérivé lithié », on entend des composés de formule $Li_{(4-x1)}M_{x1}Ti_5O_{12}$ et $Li_4Ti_{(5-y1)}N_{y1}O_{12}$, où x1 et y1 sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par « dérivé non lithié », on entend ici $Ti_{(5-y1)}N_{y1}O_{12}$, avec y1 compris entre 0 et 0,2 et N est un élément chimique choisi parmi Na, K, Mg, Nb, Al, Ni, Co, Zr, Cr, Mn, Fe, Cu, Zn, Si et Mo.

Selon une variante de réalisation, toutes les anodes sont en $Li_4Ti_5O_{12}$ et les cathodes en $LiFePO_4$.

Par « séparateur », on entend ici et dans le cadre de l'invention, un isolant électrique, conducteur ionique formé par au moins un matériau polymère tel que le polyfluorure de vinylidène (PVDF), le polyacétate de vinyle (PVA), le polyméthacrylate de méthyle (PMMA), le polyoxyéthylène (POE), le polyéthylène téréphtalate (PET), un polymère choisi parmi les polyoléfines tels le polypropylène, le polyéthylène, la cellulose.

L'électrolyte selon l'invention, peut être un liquide formé par un mélange de carbonate et au moins un sel de lithium. Par « sel de Lithium », on entend de préférence, un sel choisi parmi LiPF6, LiClO4, LiBF4 et LiAsF6.

Alternativement, l'électrolyte peut comprendre un ou plusieurs liquide ionique, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe. A titre d'exemples de liquides ioniques, on peut citer des liquides ioniques à base d'anions hydrophobes comme le trifluorométhanesulfonate ($CF_3SO_3$), bis (trifluorométhanesulfonate imide $[(CF_3SO_2)_2N]$ et tris(trifluorométhanesulfonate) méthide $[(CF_3SO_2)_3C]$.

Description détaillée

D'autres avantages et caractéristiques ressortiront mieux à la lecture de la description détaillée, faite à titre illustratif en référence aux figures suivantes parmi lesquelles:

- la figure 1 est une vue schématique en perspective éclatée montrant les différents éléments d'un accumulateur lithium-ion,
- la figure 2 est une vue de face montrant un accumulateur lithium-ion avec son emballage souple selon l'état de l'art,
- la figure 3 est une vue en perspective et par transparence d'un accumulateur lithium-ion avec son emballage souple selon l'état de l'art ;
- la figure 4 est une vue en perspective d'un accumulateur lithium-ion cylindrique selon l'état de l'art avec son emballage rigide constitué d'un boitier ;
- les figures 5A et 5B illustrent les courbes de potentiel des électrodes (cathode en haut et anode en bas) d'un accumulateur Li-ion en fonction de leur charge, respectivement à une capacité initiale correspondant à 100% de l'état de charge et à une capacité réduite correspondant à 100-x % de l'état de charge avec une perte de x% de charge à l'électrode négative générée par le manque d'ions lithium échangeables ;
- la figure 6 est une vue schématique d'un accumulateur lithium-ion selon l'invention avec son emballage rigide constitué d'un boitier.

Par souci de clarté, les mêmes références désignant les mêmes éléments d'un accumulateur Li-ion selon l'état de l'art et selon l'invention sont utilisées pour toutes les figures 1 à 6.

On précise que les différents éléments selon l'invention sont représentés uniquement par souci de clarté et qu'ils ne sont pas à l'échelle.

Les figures 1 à 5B ont déjà été commentées en détail en préambule. Elles ne sont donc pas décrites ci-après.

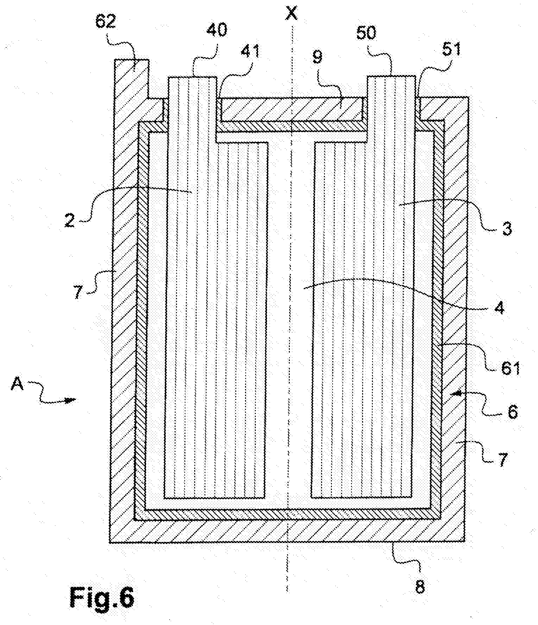

Un accumulateur selon l'invention est représenté en figure 6. Il comporte une moins une cellule électrochimique C constituée d'un séparateur 4 imprégné d'un constituant électrolyte entre une cathode 2 et une anode 3, un collecteur de courant 40 connecté à la cathode 2, un collecteur de courant 50 connecté à l'anode 3 et enfin, un boitier 6 en tant qu'emballage agencé pour contenir la cellule électrochimique avec étanchéité tout en étant traversé par une partie des collecteurs de courant 40, 50, formant les bornes de sortie.

Le boitier 6 d'axe longitudinal X comporte une enveloppe latérale cylindrique 7, un fond 8 à une extrémité, un couvercle 9 à l'autre extrémité. Le couvercle 9 supporte les pôles ou bornes de sortie du courant 40, 50. Chacune des bornes de sortie (pôles), i.e. la borne positive 40 et la borne négative 50, passent à travers le couvercle 9 avec interposition d'un joint 41, 51 qui isole électriquement la borne positive 40 respectivement négative 50 du couvercle 9. Autrement dit, les deux bornes 40, 50 sont isolées électriquement du boitier 6.

Le boitier 6 est en aluminium.

Le boitier 6 comporte une zone de stockage d'ions lithium 61 réalisée sous la forme d'une alliage lithié formé sur une partie de l'épaisseur du boitier dont la concentration en lithium diminue depuis la face interne du boitier 6 et de façon homogène sur toute cette surface.

L'accumulateur comporte en outre un élément 7, sous la forme d'un film à la fois d'isolation électrique et de conduction ionique entre l'anode 3 et cathode 2 de la cellule électrochimique et le boitier 6.

Enfin, le boitier 6 comporte une partie saillante qui forme une borne 62, qui permet la régénération de la capacité de l'accumulateur comme expliqué ci-après. Contrairement aux accumulateurs selon l'état de l'art comprenant une troisième borne reliée à une troisième électrode, il n'y a aucune nécessité à rendre étanche la borne 62 selon l'invention, celle-ci servant de connexion externe du boitier 6.

On a réalisé un exemple d'un accumulateur selon l'invention à partir d'une géométrie cylindrique d'une cellule bobinée, de 50 mm de diamètre, de 125 mm de hauteur et d'une capacité initiale d'environ 18 Ah.

Le boitier 6 est réalisé à partir d'une plaque d'aluminium, sa masse est de 75 g.

Les matériaux d'électrodes sont du graphite pour l'anode 3 et en lithium phosphate de fer (LiFePO$_4$) pour la cathode 2.

En connaissant la capacité initiale, on peut calculer la quantité d'ions lithium échangeables contenu dans l'accumulateur par le calcul suivant:

$$C*3600*M_{Li} / F.$$

Avec les valeurs respectives suivantes :

$M_{Li}$ = 6,9g/mol (masse molaire du lithium),
F = 96500C/mol (nombre de Faraday),
et C = 18Ah.

L'accumulateur contient une quantité d'ions lithium échangeables égale à 4,63g.

Il est aussi possible de calculer la quantité d'atomes de lithium que l'on peut stocker dans le boitier 6 de cet accumulateur dans le cas d'une lithiation totale du boitier en aluminium, soit un alliage Li Al, par le calcul suivant:

$$M * M_{Li} / M_{Al},$$

Avec une masse m du boitier 6 égale à 75g et une masse molaire de l'aluminium $M_{Al}$ égale à 27g/mol, on obtient une quantité égale à 19,17g de lithium apte à être stocker, c'est-à-dire une valeur de plus de 4 fois la quantité d'ions lithium échangeables utilisé initialement par l'accumulateur.

Le boitier 6 est donc largement suffisant en tant que zone de stockage de lithium. En effet, les inventeurs considèrent qu'il est raisonnable de stocker environ la moitié de la quantité de lithium échangeable, afin de régénérer la capacité de l'accumulateur Li-ion. Au-delà de cette quantité de lithium réinjectée dans l'accumulateur, d'autres phénomènes de dégradation peuvent être prépondérants et il s'avère alors impossible de régénérer l'accumulateur conformément à l'invention. De plus, une lithiation totale du boitier 6 conduirait à l'obtention d'un matériau dont les propriétés mécaniques ne sont pas satisfaisantes pour les applications visées pour l'accumulateur.

Ainsi, dans le cas d'une zone de stockage embarquée de la moitié du lithium échangeable, soit 2,32g, l'alliage obtenu est de formule Li$_{0,12}$Al (pour une lithiation homogène dans le volume du boitier 6.

En pratique, l'utilisation d'un tel accumulateur dont le boitier 6 est isolé des deux électrodes 2, 3 et lithié au cours de sa fabrication, permet la réinjection des ions Li$^+$ dans la quantité de lithium échangeable. Cette opération est réalisée par le passage d'un courant entre la borne de régénération 62 du boitier 6 et une des deux électrodes 2 ou 3.

La capacité initiale de l'accumulateur est alors régénérée.

Dans un exemple selon l'invention, il est possible de régénérer la capacité de l'accumulateur Li-ion par l'insertion d'ions Li$^+$ dans la cathode 2. L'insertion d'ions Li$^+$ peut aussi se faire dans l'anode 3.

Après avoir calculé la quantité de capacité à régénérer, on connecte alors électriquement le boitier 6 et la cathode 2 à un dispositif électronique non représenté adapté pour réguler le courant. En effet, comme le potentiel d'oxydo-réduction de l'électrode positive est supérieur à celui de l'aluminium lithié, et que l'architecture permet un échange ionique entre ces deux composants, un courant négatif va s'établir aboutissant au phénomène voulu de réinjection de lithium échangeable.

Le dispositif électronique permet la régulation d'un courant entre le boitier 6 et la cathode 2.

Avantageusement, ce dispositif peut aussi intégrer le courant en fonction du temps, afin de calculer la capacité de régénération. Préférentiellement, le courant doit être très faible, afin de permettre une réinsertion d'ions lithium de manière homogène au sein du matériau actif, et aussi pour ne pas déstructurer le matériau métallique du boitier 6.

Ce dispositif peut être intégré au BMS, ou piloté par un opérateur extérieur désirant effectuer la régénération de l'accumulateur.

Le courant limité est calculé par rapport à la capacité d'ions lithium intégrés au boitier. Dans le cas de l'exemple précédant, ou 2,32g de lithium est inséré dans le boitier, soit une capacité de 9Ah, un régime de courant de C/100, ou moins, est utilisé (9Ah/100h soit 90mA).

Dès l'atteinte de la quantité de lithium à insérer obtenue, un cycle de charge/décharge de l'accumulateur peut être réalisé afin de vérifier que la régénération est effective.

L'obtention du boitier 6, contenant des ions lithiums stockés dans la face interne 61, doit être réalisée avant la conception de l'accumulateur par des procédés de lithiation. Par exemple, il est envisageable d'effectuer une lithiation électrochimique. La conception métallurgique d'un alliage d'aluminium contenant du lithium peut aussi être envisagée.

L'invention n'est pas limitée aux exemples qui viennent d'être décrits ; on peut notamment combiner entre elles des caractéristiques des exemples illustrés au sein de variantes non illustrées.

Bien que décrite en référence à un accumulateur Li-ion, l'invention peut tout aussi bien s'appliquer à tout générateur électrochimique fonctionnant sur le principe d'insertion-désinsertion d'ions Lithium Li$^+$.

**Revendications**

1. Procédé de régénération de la capacité d'un accumulateur électrochimique au lithium, tel qu'un accumulateur Li-ion, comportant au moins une cellule électrochimique comportant une cathode (2), une anode (3), et un séparateur (4) imprégné d'un électrolyte entre l'anode et la cathode, deux collecteurs de courant dont un (50) est relié à l'anode et l'autre (40) à la cathode, et un boitier (6) agencé pour loger la cellule électrochimique avec étanchéité tout en étant traversé par une partie des collecteurs de courant formant les bornes de sortie, **caractérisé en ce que** le procédé comporte les étapes suivantes :

    a/ évaluation de la quantité d'ions lithium,
    b/ lorsque la quantité d'ions lithium évaluée est inférieure ou égale à une valeur seuil, application d'un courant électrique entre la cathode ou l'anode et l'emballage de sorte à provoquer la délithiation du boitier,

le boitier étant en outre agencé pour loger un élément (7) à la fois d'isolation électrique et de conduction ionique entre les électrodes d'anode et de cathode de la cellule électrochimique d'une part et le boitier d'autre part, le boitier comportant au moins une zone (61) de stockage d'ions lithium.

2. Procédé de régénération selon la revendication 1, l'évaluation a/ étant réalisée par mesure de potentiel électrique d'une électrode de référence.

3. Procédé de régénération selon la revendication 1, l'évaluation a/ étant réalisée par mesure de différence de capacité avec la capacité initiale de l'accumulateur.

4. Procédé de régénération selon la revendication 1, l'évaluation a/ étant réalisée par mesure d'impédance électrochimique.

5. Procédé de régénération selon l'une des revendications précédentes, l'application du courant b/ étant réalisée avec régulation au moyen d'un dispositif électronique.

6. Procédé de régénération selon la revendication 5, le dispositif électronique étant adapté pour calculer l'intégrale du courant en fonction du temps afin de déterminer la capacité à régénérer.

7. Accumulateur (A) électrochimique au lithium, tel qu'un accumulateur Li-ion, comportant :

    - au moins une cellule électrochimique C comportant, une cathode (2), une anode (3) et un séparateur (4), imprégné d'un électrolyte, entre l'anode et la cathode,
    - deux collecteurs de courant dont un (50) est relié à l'anode et l'autre (40) à la cathode,
    - un boitier (6) agencé pour loger la cellule électrochimique avec étanchéité tout en étant traversé par une partie des collecteurs de courant formant les bornes de sortie,

**caractérisé en ce que** le boitier est en outre agencé pour loger un élément (7) à la fois d'isolation électrique et de conduction ionique entre les électrodes d'anode et de cathode de la cellule électrochimique d'une part et le boitier d'autre part, le boitier comportant au moins une zone (61) de stockage d'ions lithium.

8. Accumulateur selon la revendication 7, le matériau du boitier étant un alliage aluminium-lithium de formule $Li_xAl$ avec x compris entre 0 et 1.

9. Accumulateur selon la revendication 8, l'alliage aluminium-lithium de formule $Li_xAl$ étant obtenu par un procédé de lithiation électrochimique d'un substrat en aluminium.

10. Accumulateur selon l'une des revendications 7 à 9, le boitier comportant une couche barrière de diffusion des ions lithium.

11. Accumulateur selon la revendication 10, la couche barrière de diffusion étant en oxyde d'aluminium ou alumine $Al_2O_3$.

12. Accumulateur selon l'une des revendications 7 à 11, l'élément d'isolation électrique et de conduction ionique étant constitué d'au moins un film en matériau polymère choisi parmi polyfluorure de vinylidène (PVDF), le polyacétate de vinyle (PVA), le polyméthacrylate de méthyle (PMMA), le polyoxyéthylène (POE), le polyéthylène téréphtalate (PET), un polymère choisi parmi les polyoléfines tels le polypropylène, le polyéthylène, la cellulose.

13. Accumulateur selon l'une des revendications 7 à 11, l'élément d'isolation électrique et de conduction ionique étant une couche protectrice déposée sur la face interne du substrat du boitier.

**Patentansprüche**

1. Verfahren zur Regeneration der Kapazität eines elektrochemischen Lithium-Akkumulators wie etwas eines Lithium-Ionen-Akkumulators, mit wenigstens einer elektrochemischen Zelle, die eine Kathode (2), eine Anode (3) und ein mit einem Elektrolyten imprägniertes Trennelement (14) zwischen der Anode und der Kathode aufweist, zwei Stromkollektoren, von denen einer (50) mit der Anode und der andere (40) mit der Kathode verbunden ist, und einem Gehäuse (6), das dazu ausgebildet ist, die elektrochemische Zelle dicht aufzunehmen und dabei von einem Teil der Stromkollektoren durchsetzt wird, der die Ausgangsklemmen bildet, **dadurch gekennzeichnet, dass** das Verfahren die folgenden Schritte aufweist:

a/ Bewerten der Menge an Lithium-Ionen,
b/ wenn die festgestellte Menge an Lithium-Ionen kleiner oder gleich einem Schwellenwert ist, Anlegen eines elektrischen Stromes zwischen der Kathode oder der Anode und der Verpackung, derart, dass eine Delithiierung des Gehäuses bewirkt wird,

wobei das Gehäuse außerdem dazu ausgebildet ist, ein Element (7) aufzunehmen, das zugleich zur elektrischen Isolation und zur Ionenleitung zwischen den Elektroden der Anode und der Kathode der elektrochemischen Zelle einerseits und dem Gehäuse andererseits dient, wobei das Gehäuse wenigstens eine Zone (61) zur Speicherung von Lithium-Ionen aufweist.

2. Verfahren nach Anspruch 1, bei dem die Bewertung a/ durch Messen des elektrischen Potentials einer Bezugselektrode erfolgt.

3. Verfahren nach Anspruch 1, bei dem die Bewertung a/ durch Messung der Kapazitätsdifferenz mit der anfänglichen Kapazität des Akkumulators erfolgt.

4. Verfahren nach Anspruch 1, bei dem die Bewertung a/ durch Messen der elektrochemischen Impedanz erfolgt.

5. Verfahren nach einem der vorstehenden Ansprüche, bei dem das Anlegen des Stromes b/ durch Steuerung mit Hilfe einer elektronischen Einrichtung erfolgt.

6. Verfahren nach Anspruch 5, bei dem die elektronische Einrichtung dazu angepasst ist, das Integral des Stromes als Funktion der Zeit zu berechnen, um die zu regenerierende Kapazität zu bestimmen.

7. Elektrochemischer Lithium-Akkumulator (A), etwa ein Lithium-Ionen-Akkumulator, mit:

- wenigstens einer elektrochemischen Zelle C, die eine Kathode (2), eine Anode (3) und ein mit einem Elektrolyten imprägniertes Trennelement (14) zwischen der Anode und der Kathode aufweist,
- zwei Stromkollektoren, von denen einer (50) mit der Anode und der andere (40) mit der Kathode verbunden ist,
- einem Gehäuse (6), das dazu ausgebildet ist, die elektrochemische Zelle dicht aufzunehmen und dabei von einem Teil der Stromkollektoren durchsetzt wird, der die Ausgangsklemmen bildet,

**dadurch gekennzeichnet, dass** das Gehäuse weiterhin dazu ausgebildet ist, ein Element (7) aufzunehmen, das zugleich zur elektrischen Isolation und zur Ionenleitung zwischen den Elektroden der Anode und der Kathode der elektrochemischen Zelle einerseits und dem Gehäuse andererseits dient, wobei das Gehäuse wenigstens eine Zone (61) zur Speicherung von Lithium-Ionen aufweist.

8. Akkumulator nach Anspruch 7, bei dem das Material des Gehäuses eine Aluminium-Lithium-Legierung mit der Formel $Li_xAl$ ist, wobei x zwischen 0 und 1 liegt.

9. Akkumulator nach Anspruch 8, bei dem die Aluminium-Lithium-Legierung mit der Formel $Li_xAl$ durch ein Verfahren zur elektrochemischen Lithiierung eines Substrats aus Aluminium erhalten wird.

10. Akkumulator nach einem der Ansprüche 7 bis 9, bei dem das Gehäuse eine Schicht als Diffusionsbarriere für die Lithium-Ionen aufweist.

11. Akkumulator nach Anspruch 10, bei dem die Diffusionsbarriereschicht aus einem Aluminiumoxid oder $Al_2O_3$ gebildet ist.

12. Akkumulator nach einem der Ansprüche 7 bis 11, bei dem das Element zur elektrischen Isolation und zur Ionenleitung durch wenigstens einen Film aus einem Polymermaterial gebildet wird, das ausgewählt ist unter Polyvinylidenfluorid (PVDF), Polyvinylazetat (PVA), Polymethylmethacrylat (PMMA), Polyoxyethylen (POE), Polyethylenterephtalat (PET), einem Polymer ausgewählt unter Polyolefinen wie etwa Polypropylen, Polyethylen, Cellulose.

13. Akkumulator nach einem der Ansprüche 7 bis 11, bei dem das Element zur elektrischen Isolation und Ionenleitung eine Schutzschicht ist, die auf der Innenfläche des Substrats des Gehäuses angebracht ist.

**Claims**

1. A method for regenerating the capacity of a lithium electrochemical accumulator, such as a Li-ion accumulator, including at least one electrochemical cell including a cathode (2), an anode (3), and a separator (4) impregnated with an electrolyte between the anode and the cathode, two current collectors one (50) of which is connected to the anode and the other (40) to the cathode, and a casing (6) arranged to house the electrochemical cell with seal-tightness while being passed through by a portion of the current collectors forming the output terminals, the method including the following steps:

a/ evaluating the amount of lithium ions,
b/ when the evaluated amount of lithium ions is smaller than or equal to a threshold value, applying an electrical current between the cathode or anode and the package so as to cause delithiation of the casing,

the casing furthermore being arranged to house an element (7), which is both electrically insulating and ionically conductive, between the anode and cathode electrodes of the electrochemical cell, on the one hand, and the casing, on the other hand, the casing including at least one zone (61) for storing lithium ions.

2. The regenerating method as claimed in claim 1, the evaluation a/ being carried out by measuring the electrical potential of a reference electrode.

3. The regenerating method as claimed in claim 1, the evaluation a/ being carried out by measuring a capacity difference with respect to the initial capacity of the accumulator.

4. The regenerating method as claimed in claim 1, the evaluation a/ being carried out by measuring electrochemical impedance.

5. The regenerating method as claimed in one of the preceding claims, the application of the current b/ being carried out with regulation by means of an electronic device.

6. The regenerating method as claimed in claim 5, the electronic device being suitable for calculating the integral of the current as a function of time in order to determine the regenerated capacity.

7. A lithium electrochemical accumulator (A), such as a Li-ion accumulator, including:

- at least one electrochemical cell C including a cathode (2), an anode (3) and a separator (4), impregnated with an electrolyte, between the anode and cathode,
- two current collectors one (50) of which is connected to the anode and the other (40) to the cathode,
- a casing (6) arranged to house the electrochemical cell with seal-tightness while being passed through by a portion of the current collectors forming the output terminals,

the casing furthermore being arranged to house an element (7), which is both electrically insulating and ionically conductive, between the anode and cathode electrodes of the electrochemical cell, on the one hand, and the casing, on the other hand, the casing including at least one zone (61) for storing lithium ions.

8. The accumulator as claimed in claim 7, the material of the casing being a lithium-aluminum alloy of formula $Li_xAl$ with x comprised between 0 and 1.

9. The accumulator as claimed in claim 8, the lithium-aluminum alloy of formula $Li_xAl$ being obtained by a process of the electrochemical lithiation of a substrate made of aluminum.

10. The accumulator as claimed in one of claims 7 to 9, the casing including a diffusion barrier layer forming a barrier to diffusion of the lithium ions.

11. The accumulator as claimed in claim 10, the diffusion barrier layer being made of aluminum oxide or alumina $Al_2O_3$.

12. The accumulator as claimed in one of claims 7 to 11, the electrically insulating and ionically conductive element consisting of at least one film made of a polymer chosen from polyvinylidene fluoride (PVDF), polyvinyl acetate (PVA), polymethyl methacrylate (PMMA), polyoxyethylene (POE) and polyethylene terephthalate (PET), or of a polymer chosen from polyolefins such as polypropylene, polyethylene or cellulose.

13. The accumulator as claimed in one of claims 7 to 11, the electrically insulating and ionically conductive element being a protective layer deposited on the internal face of the substrate of the casing.

Fig.1

Fig.2

Fig.3

Fig.4

Fig.5A

Fig.5B

**Fig.6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060121348 A
- US 7348098 B
- US 7338733 B
- US 2008060189 A
- US 20080057392 A
- US 7335448 B
- WO 2010113502 A
- US 2010316094 A
- JP 2012089471 B
- WO 201224211 A
- EP 2595235 A
- JP 2011076930 B
- JP H08167401 A
- JP 2008171649 A
- WO 2008002626 A2